# EUROPEAN PATENT APPLICATION

(11) **EP 4 394 933 A1**
(43) Date of publication of application: **03.07.2024**
(21) Application number: 23866664.8
(22) Date of filing: 30.08.2023
(51) Int. Cl.: H01M 4/36, H01M 4/525, H01M 4/62, H01M 10/0525, H01M 4/131

(54) **TERNARY POSITIVE ELECTRODE MATERIAL, AND PREPARATION METHOD THEREFOR AND USE THEREOF**

(30) Priority: 24.10.2022 CN 202211302792
(71) Applicant: Tianjin B&M Science And Technology Co., Ltd., Tianjin 300384 (CN)
(72) Inventor: CHEN, Zhiyu, Tianjin 300384 (CN); LI, Honglei, Tianjin 300384 (CN); JI, Changyin, Tianjin 300384 (CN); LV, Fei, Tianjin 300384 (CN); XU, Ning, Tianjin 300384 (CN)
(74) Representative: Sackin, Robert
(86) International application number: PCT/CN2023/115676
(87) International publication number: WO 2024/087872

(57) **Abstract**

The present application relates to a ternary cathode material, a preparation method and use thereof. The present application provides a ternary cathode material including a ternary cathode material bulk and a coating layer, wherein the coating layer is covered on a surface of the ternary cathode material bulk. The ternary cathode material bulk includes a material represented by a chemical formula of LiNiₓCo_{y}M_{1-z-y}O₂, wherein M includes one or more of Mn, Al, Mg, Ti, Zr, Y, Nb, W, Ce, Sb, Sr, or Ta, 0.50<x≤0.98, 0≤y≤0.25, and x+y<1. The material of the coating layer includes polyhedral oligomeric silsesquioxane (POSS).

## Description

### RELATED APPLICATIONS

This application claims priority to the Chinese patent application No. 202211302792.9 filed on October 24, 2022, titled "TERNARY CATHODE MATERIAL, PREPARATION METHOD AND USE THEREOF", which is hereby incorporated by reference in its entirety.

### TECHNICAL FIELD

The present application relates to the technical field of lithium-ion battery materials, and in particular to a ternary cathode material, a preparation method and use thereof.

### BACKGROUND

The mature application of lithium-ion batteries in electric vehicles and electric tools allows the current power batteries to develop towards high endurance and high safety. Currently, the two major research directions for the application of lithium-ion battery cathode materials are highnickel and low-cobalt cathode materials and medium-nickel and high-voltage cathode materials. Compared with polycrystalline materials, single crystal materials have advantages in pressure resistance and structural stability. However, the single crystal materials have large specific surface area and strong water absorption, which leads to the dissolution of active lithium and the increase of residual alkali, thus increasing the risk of failure, such as agglomeration and invalidation, during preparation of cathode slurry. Moreover, the increase in moisture content of the single crystal materials will affect the coating effect of the electrode plates and the cycling performance of the batteries, which greatly limits the development and application of medium-/high-nickel single crystal materials.

### SUMMARY

Accordingly, the present application provides a ternary cathode material, a preparation method thereof, a positive electrode plate, a lithium-ion battery, and an electrical device.

In a first aspect, the present application provides a ternary cathode material including a ternary cathode material bulk and a coating layer, wherein the coating layer is covered on a surface of the ternary cathode material bulk.

The ternary cathode material bulk includes a material represented by a chemical formula of LiNiₓCo_{y}M_{1-z-y}O₂, wherein M includes one or more of Mn, Al, Mg, Ti, Zr, Y, Nb, W, Ce, Sb, Sr, or Ta, 0.50<x≤0.98, 0≤y≤0.25, and x+y<1. The material of the coating layer includes polyhedral oligomeric silsesquioxane (POSS).

In some embodiments, the ternary cathode material bulk includes a material represented by a chemical formula of LiNiₓCo_{y}M_{1-x-y}O₂, wherein M includes one or more of Mn, Al, Ti, or Zr, 0.50<x≤0.98, 0<y≤0.25, and x+y<1.

In some embodiments, the ternary cathode material bulk includes a material represented by a chemical formula of LiNiₓCo_{y}Mn_{1-x-y}O₂, wherein 0.50<x≤0.98, 0<y≤0.25, and x+y<1.

In some embodiments, the ternary cathode material bulk includes a material represented by a chemical formula of LiNiₓCo_{y}Mn_{1-x-y}C₂, wherein 0.50<x≤0.98, 0<y<0.25, and x+y<1.

In some embodiments, the polyhedral oligomeric silsesquioxane includes one or more of alkyl-polyhedral oligomeric silsesquioxane, phenyl-polyhedral oligomeric silsesquioxane, alkenyl-polyhedral oligomeric silsesquioxane, amino-polyhedral oligomeric silsesquioxane, hydroxyl-polyhedral oligomeric silsesquioxane, or acrylate-polyhedral oligomeric silsesquioxane.

In some embodiments, the polyhedral oligomeric silsesquioxane includes amino-polyhedral oligomeric silsesquioxane, acrylate-polyhedral oligomeric silsesquioxane, or a combination thereof.

In some embodiments, the polyhedral oligomeric silsesquioxane is amino-polyhedral oligomeric silsesquioxane.

In some embodiments, a mass ratio of the coating layer to the ternary cathode material bulk is from 0.0001: 1 to 0.05: 1. In some embodiments, a mass ratio of the coating layer to the ternary cathode material bulk is from 0.001: 1 to 0.05: 1.

In some embodiments, the ternary cathode material bulk has a specific surface area of 0.4 m²/g to 2.5 m²/g. In some embodiments, the ternary cathode material bulk has a specific surface area of 0.85 m²/g to 2.0 m²/g.

In a second aspect, the present application provides a method for preparing the ternary cathode material as described above, including steps of:
preparing a ternary cathode material bulk; and
mixing the ternary cathode material bulk with a material of a coating layer, and performing a first sintering, thereby obtaining the ternary cathode material,
wherein the ternary cathode material bulk includes a material represented by a chemical formula of LiNiₓCo_{y}M_{1-x-y}O₂, wherein M includes one or more of Mn, Al, Mg, Ti, Zr, Y, Nb, W, Ce, Sb, Sr, or Ta, 0.50<x≤0.98, 0≤y≤0.25, and x+y<1; and the material of the coating layer includes polyhedral oligomeric silsesquioxane.

In some embodiments, process conditions of the first sintering include: a temperature of the first sintering in a range from 260°C to 700°C, and a time period of the first sintering in a range from 4 hours to 12 hours.

In some embodiments, the preparation of the ternary cathode material bulk includes steps of:
(1) mixing a ternary cathode material bulk precursor, a first lithium source and optionally a metal compound, and performing a second sintering to obtain an intermediate material; and
(2) mixing the intermediate material with a second lithium source, and performing a third sintering, thereby obtaining the ternary cathode material bulk.

In some embodiments, the preparation of the ternary cathode material bulk includes steps of:
S1. mixing a ternary cathode material bulk precursor, optionally a metal compound, and a first lithium source to obtain an intermediate A;
S2. performing pre-sintering to the intermediate A to obtain an intermediate B; and
S3. mixing the intermediate B with a second lithium source, and then performing a second sintering, thereby obtaining the ternary cathode material bulk.

In some embodiments, the ternary cathode material bulk precursor in step (1) or step S1 includes a material represented by a chemical formula of NiₓCo_{y}M_{1-x-y}(OH)₂, wherein 0.50<x≤0.98, 0 ≤y≤0.25, x+y <1, and M includes one or more of Mn, Al, Mg, Ti, Zr, Y, Nb, W, Ce, Sb, Sr, or Ta.

In some embodiments, a metal element in the metal compound in step (1) or step S1 includes one or more of Al, Mg, Ti, Zr, Y, Nb, W, Ce, Sb, Sr, or Ta. In some embodiments, the metal element in the metal compound in step (1) or step S1 includes one or more of Al, Ti, or Zr.

In some embodiments, in step (1) or step S1, a molar ratio of Li⁺ in the first lithium source, the metal element in the optional metal compound, and the ternary cathode material bulk precursor is (0.50 to 1.06): (0 to 0.02): 1.

In some embodiments, the first lithium source in step (1) or step S1 and the second lithium source in step (2) or step S3 each independently include one or both of lithium hydroxide and lithium carbonate.

In some embodiments, process conditions of the second sintering in step (1) include a sintering temperature in a range from 400°C to 650°C, and a sintering time period in a range from 3 hours to 10 hours.

In some embodiments, process conditions of the pre-sintering in step S2 include a sintering temperature in a range from 400°C to 650°C, and a sintering time period in a range from 3 hours to 10 hours.

In some embodiments, in step (2), a molar ratio of Li⁺ in the second lithium source to the intermediate material is 0:1 to 0.55:1.

In some embodiments, in step S3, a molar ratio of Li⁺ in the second lithium source to the intermediate B is 0:1 to 0.55:1.

In some embodiments, process conditions of the third sintering in step (2) include a sintering temperature in a range from 600°C to 1100°C, and a sintering time period in a range from 6 hours to 20 hours.

In some embodiments, the second sintering temperature in step S3 is from 600°C to 1100°C, and the second sintering time period in step S3 is from 6 hours to 20 hours.

In a third aspect, the present application provides a positive electrode plate, including the ternary cathode material as described above or the ternary cathode material prepared by the preparation method as described above.

In a fourth aspect, the present application provides a lithium-ion battery including the positive electrode plate as described above.

In a fifth aspect, the present application provides an electrical device including the lithium-ion battery as described above.

In a sixth aspect, the present application provides a ternary cathode material, including at least one of the following characteristics:
an increase in moisture content not more than 97 ppm, such as between 13 ppm and 97 ppm, after storage for 30 days at a temperature of 25°C and a relative humidity of 40% as compared to that after storage for 0 day;
an increase in moisture content not more than 118 ppm, such as between 23 ppm and 118 ppm, after storage for 60 days at a temperature of 25°C and a relative humidity of 40% as compared to that after storage for 0 day;
an increase in moisture content not more than 297 ppm, such as between 128 ppm and 297 ppm, after storage for 30 days at a temperature of 25°C and a relative humidity of 80% as compared to that after storage for 0 day; and
an increase in moisture content not more than 315 ppm, such as between 133 ppm and 315 ppm, after storage for 60 days at a temperature of 25°C and a relative humidity of 80% as compared to that after storage for 0 day.

In a seventh aspect, the present application provides a ternary cathode material, wherein a battery prepared from the ternary cathode material has a capacity retention rate at 100th cycle of not less than 92%, wherein the capacity retention rate at 100th cycle is measured by subj ecting the battery stored at 45°C and 40% or 80% relative humidity for 60 days, to charge and discharge for 100 cycles with 0.3 C constant current at a voltage of 2.5 V to 4.25 V

One or more embodiments of the present application are set forth in the accompanying drawings and the description below in details. Other features, objects and advantages of the present application will become apparent from the description, accompanying drawings and claims.

### BRIEF DESCRIPTION OF ACCOMPANYING DRAWINGS

Figure 1 is an SEM image of a ternary cathode material prepared in Example 1 of the present application.
Figure 2 is an SEM image of a ternary cathode material prepared in Example 4 of the present application.
Figure 3 is an XRD image of a ternary cathode material prepared in Example 1 of the present application.

### DETAILED DESCRIPTION

In order to make the above purposes, features, and advantages of the present application more apparent and understandable, a detailed description of the specific embodiments of the present application will be given below in conjunction with the accompanying drawings. Many specific details are set forth in the following description to facilitate a full understanding of the present application. However, the present application can be implemented in many ways different from the embodiments described herein, and those skilled in the art can make similar improvements without departing from the content of the present application. Therefore, the present application is not limited by the specific embodiments disclosed below.

In the description of the present application, the professional terms and words not explicitly stated have the same meaning as commonly understood by those skilled in the art and belong to the common knowledge to those skilled in the art, and the methods not explicitly stated are conventional methods known to those skilled in the art, unless otherwise defined.

In addition, terms such as "first", "second" and "third" are merely used for describing purposes and cannot be understood as indicating or implying relative importance, or implicitly indicating the number of indicated technical features. In view of that, the features defined with "first", "second" and "third" can explicitly or implicitly include at least one of the features. In the present application, the term "a plurality of" means at least two, including two, three, etc., unless otherwise explicitly and specifically defined.

In the present application, the technical features described in open type include both closed-type technical solutions consisting of the listed features, and open-type technical solutions including the listed features.

An embodiment of the present application provides a ternary cathode material including a ternary cathode material bulk and a coating layer, wherein the coating layer is covered on a surface of the ternary cathode material bulk.

The ternary cathode material bulk includes a material represented by a chemical formula of LiNiₓCo_{y}M_{1-z-y}O₂, wherein M includes one or more of Mn, Al, Mg, Ti, Zr, Y, Nb, W, Ce, Sb, Sr, or Ta, 0.50<x≤0.98, 0≤y≤0.25, and x+y<1. The material of the coating layer includes polyhedral oligomeric silsesquioxane.

In some embodiments, M includes one or more of Mn, Al, Ti, or Zr. In some embodiments, M is Mn. In some embodiments, 0.50<x≤0.98, 0<y≤0.25, and x+y<1. In some embodiments, 0.50<x≤0.98, 0<y<0.25, and x+y<1. Thus, the adhesion of moisture in the air to the surface of the ternary cathode material can be effectively inhibited, thereby improving the adaptability of the ternary cathode material to the storage environment, extending the storage time thereof, and improving the cycling performance of the lithium-ion battery.

The coating layer on the surface of the ternary cathode material bulk is super hydrophobic and has an organic-inorganic composite structure. The inner inorganic layer of the hydrophobic coating layer is closely bound to the ternary cathode material bulk, and the outer organic layer of the hydrophobic coating layer is in contact with the air, thereby effectively reducing the hygroscopicity of the ternary cathode material. Therefore, the hydrophobic coating layer can improve the adaptability of the ternary cathode material to the storage environment and extend the storage time of the ternary cathode material. Besides, the coating layer which is superhydrophobic can constrain the expansion and extension of microcracks, absorb energy, and reduce stress concentration in the ternary cathode material bulk. The organic active sites of the coating layer can increase the cross-linking degree and compatibility of the system, improve the mechanical properties and strength of the material, thereby maintaining the structural stability of the material and improving the cycling retention rate of the lithium-ion batteries. Further, the coating layer has a specific cage structure and intramolecular porous channels, which are conducive to the conduction of lithium ions, thus improving the dynamic performance of the material bulk.

It can be understood that x may be, for example, 0.51, 0.52, 0.53, 0.54, 0.55, 0.57, 0.59, 0.60, 0.62, 0.65, 0.70, 0.80, 0.90, 0.95 or 0.98, and y may be, for example, 0.01, 0.02, 0.03, 0.04, 0.05, 0.06, 0.07, 0.08, 0.10, 0.15, 0.20, 0.22, 0.24 or 0.25.

In some embodiments, the polyhedral oligomeric silsesquioxane includes one or more of alkyl-polyhedral oligomeric silsesquioxane, phenyl-polyhedral oligomeric silsesquioxane, alkenyl-polyhedral oligomeric silsesquioxane, amino-polyhedral oligomeric silsesquioxane, hydroxyl-polyhedral oligomeric silsesquioxane, or acrylate-polyhedral oligomeric silsesquioxane. In some embodiments, the polyhedral oligomeric silsesquioxane includes amino-polyhedral oligomeric silsesquioxane, acrylate-polyhedral oligomeric silsesquioxane, or a combination thereof. In some embodiments, the polyhedral oligomeric silsesquioxane is amino-polyhedral oligomeric silsesquioxane.

In some embodiments, the coating layer and the ternary cathode material bulk are in a mass ratio of 0.0001:1 to 0.05:1 It can be understood that the mass ratio of the coating layer to the ternary cathode material bulk may be any value between 0.0001:1 and 0.05:1, for example, 0.0001:1, 0.0002:1, 0.0003:1, 0.0005:1, 0.0008:1, 0.001:1, 0.005:1, 0.008:1, 0.01:1, 0.02:1, 0.03:1, 0.04:1 or 0.05:1. In some embodiments, the coating layer and the ternary cathode material bulk are in a mass ratio of 0.001:1 to 0.05:1. It should be noted that the mass ratio of the coating layer to the ternary cathode material bulk cannot be too high or too low. If the mass ratio is too high, the coating layer would be too thick to affect the transmission speed of lithium ions. If the mass ratio is too low, the coating layer would be too thin to effectively reduce the hygroscopicity of the ternary cathode material.

In some embodiments, the coating layer forms continuous layered coating. In other words, the coating layer can entirely cover the ternary cathode material bulk.

In some embodiments, the ternary cathode material bulk has a specific surface area of 0.4 m²/g to 2.5 m²/g. In some embodiments, the ternary cathode material bulk has a specific surface area of 0.85 m²/g to 2.0 m²/g. It can be understood that the specific surface area of the ternary cathode material bulk may be, for example, 0.4 m²/g, 0.5 m²/g, 0.6 m²/g, 0.7 m²/g, 0.8 m²/g, 0.9 m²/g, 1 m²/g, 1.2 m²/g, 1.5 m²/g, 1.7 m²/g, 2 m²/g, 2.2 m²/g, 2.5 m²/g. The specific surface area of the ternary cathode material bulk is controlled to be 0.4 m²/g to 2.5 m²/g, so that the ternary cathode material can achieve the best hydrophobic effect, without affecting its dynamic performance.

Another embodiment of the present application provides a method for preparing the ternary cathode material as described above, including steps of:
preparing a ternary cathode material bulk; and
mixing the ternary cathode material bulk with the material of the coating layer, and performing a first sintering.

In some embodiments, process conditions of the first sintering include: a temperature of the first sintering in a range from 260°C to 700°C, and a time period of the first sintering in a range from 4 hours to 12 hours. It can be understood that the temperature of the first sintering may be, for example, 260°C, 280°C, 300°C, 320°C, 350°C, 370°C, 400°C, 410°C, 430°C, 470°C, 490°C, 500°C, 550°C, 600°C, 650°C or 700°C, etc. The temperature of the first sintering can also be other values between 260°C and 700°C. The time period of the first sintering may be any value between 4 hours and 12 hours, for example, 4 hours, 4.2 hours, 4.5 hours, 4.7 hours, 5 hours, 5.5 hours, 6 hours, 6.5 hours, 7 hours, 8 hours, 9 hours, 10 hours, 11 hours or 12 hours, etc.

In some embodiments, the preparation of the ternary cathode material bulk includes steps of:
(1) mixing a ternary cathode material bulk precursor, a first lithium source and optionally a metal compound, and performing a second sintering to obtain an intermediate material; and
(2) mixing the intermediate material with a second lithium source, and performing a third sintering, thereby obtaining the ternary cathode material bulk.

In some embodiments, the preparation of the ternary cathode material bulk includes steps of:
S1. mixing a ternary cathode material bulk precursor, optionally a metal compound and a first lithium source to obtain an intermediate A;
S2. performing pre-sintering to the intermediate A to obtain an intermediate B; and
S3. mixing the intermediate B with a second lithium source, and then performing a second sintering, thereby obtaining the ternary cathode material bulk.

In some embodiments, the ternary cathode material bulk precursor in step (1) or step S1 includes a material represented by a chemical formula of NiₓCo_{y}M_{1-x-y}(OH)₂, wherein 0.50<x≤0.98, 0<y≤0.25, and x+y<1. It can be understood that x may be, for example, 0.51, 0.52, 0.53, 0.54, 0.55, 0.57, 0.59, 0.60, 0.62, 0.65, 0.70, 0.80, 0.90, 0.95 or 0.98, and y may be, for example, 0.01, 0.02, 0.03, 0.04, 0.05, 0.06, 0.07, 0.08, 0.10, 0.15, 0.20, 0.22, 0.24 or 0.25.

In some embodiments, a metal element in the metal compound in step (1) or step S1 includes one or more of Al, Mg, Ti, Zr, Y, Nb, W, Ce, Sb, Sr or Ta. In some embodiments, the metal element in the metal compound in step (1) or step S1 includes one or more of Al, Ti, or Zr. It should be noted that the metal compound may be an oxide, a hydroxide or a carbonate of the above metals, for example, Al₂O₃, MgO, TiO₂, ZrO₂, Y₂O₃, Nb₂O₅, WO₃, CeO₂, Sb₂O₃, Sb₂O₅, SrO, Ta₂O₅, Al(OH)₃, Mg(OH)₂, Zr(OH)₄, Ti(OH)₄, Sr(OH)₂, Al₂(CO₃)₃, MgCO₃, SrCO₃ or Zr₃(CO₃)O₅.

In some embodiments, a molar ratio of Li⁺ in the first lithium source, the metal element in the optional metal compound, and the ternary cathode material bulk precursor in step (1) or step S1 is (0.50 to 1.06): (0 to 0.02): 1. It can be understood that the metal compound in step S1 can have a molar amount of 0. When the mass of the metal compound in step S1 is not 0, the molar ratio of Li⁺ in the first lithium source, the metal element in the metal compound, and the ternary cathode material bulk precursor in step S1 can be, for example, 0.50:0.001:1, 0.51:0.002:1, 0.57:0.005:1, 0.60:0.007:1, 0.72:0.009: 1, 0.80:0.01: 1, 0.90:0.015: 1. 0.95: 0.017: 1, 1.00:0.019: 1, or 1.06:0.02: 1, etc. In the present application, the purpose of adding the metal compound is to make the metal elements to play a supporting role between the transition metal layers and to increase the dynamic performance of the ternary cathode material, thereby ensuring the stability of the layered structure of the ternary cathode material and improving the transmission of lithium ions.

In some embodiments, the first lithium source in step (1) or step S1 and the second lithium source in step (2) or step S3 each independently include one or both of lithium hydroxide and lithium carbonate.

In some embodiments, process conditions of the pre-sintering in step S2 include: a pre-sintering temperature in a range from 400°C to 650°C, and a pre-sintering time period in a range from 3 hours to 10 hours. It can be understood that the pre-sintering temperature may be, for example, 400°C, 420°C, 435°C, 450°C, 465°C, 480°C, 500°C, 550°C, 600°C or 650°C. The pre-sintering temperature may also be other values between 400°C and 650°C. The pre-sintering time period may be 3 hours, 3.5 hours, 4 hours, 4.5 hours, 5 hours, 6 hours, 7 hours, 8.5 hours or 10 hours, or other values between 3 hours and 10 hours. The pre-sintering in step S2 corresponds to the second sintering in step (1) above. Therefore, the process conditions of the pre-sintering in step S2 are applicable to the second sintering in step (1) above.

In some embodiments, a molar ratio of Li⁺ in the second lithium source to the intermediate B in step S3 is 0: 1 to 0.55: 1. It should be noted that, when the composition of the intermediate B is the same as the composition of the ternary cathode material bulk, there is no need to supplement lithium. In this case, the amount of the second lithium source in step S3 is 0. When the composition of the intermediate B is different from the composition of the ternary cathode material bulk, the second lithium source needs to be added to supplement lithium. In this case, the molar ratio of Li⁺ in the second lithium source to the intermediate B may be, for example, 0.01:1, 0.015:1, 0.018:1, 0.02:1, 0.025:1, 0.027:1, 0.03:1, 0.035:1, 0.04:1, 0.045:1, 0.05:1 or 0.055:1. The second lithium source in step S3 corresponds to the second lithium source in step (2) above, and the intermediate B in step S3 corresponds to the intermediate material in step (2) above. Therefore, the molar ratio of Li⁺ in the second lithium source to the intermediate B in step S3 is applicable to the molar ratio of Li⁺ in the second lithium source to the intermediate material in step (2) above.

In some embodiments, the second sintering temperature in step S3 is in a range from 600°C to 1100°C, the second sintering time period in step S3 is in a range from 6 hours to 20 hours. It can be understood that the second sintering temperature in step S3 may be, for example, 600°C, 620°C, 650°C, 670°C, 700°C, 800°C, 900°C, 1000°C or 1100°C, etc. The second sintering time period in step S3 may be, for example, 6 hours, 6.5 hours, 7 hours, 7.5 hours, 8 hours, 9 hours, 10 hours, 11 hours, 12 hours, 13 hours, 14 hours, 15 hours, 16 hours, 17 hours, 18 hours, 19 hours, or 20 hours, etc. The second sintering in step S3 corresponds to the third sintering in step (2) above. Therefore, the process conditions of the second sintering in step S3 are applicable to the third sintering in step (2) above.

Another embodiment of the present application provides a positive electrode plate, including the above-mentioned ternary cathode material or the ternary cathode material prepared by the above-mentioned preparation method. It should be noted that the positive electrode plate can be prepared as follows: adding a solvent to raw materials, which are the above-mentioned ternary cathode material or the ternary cathode material prepared by the above-mentioned preparation method, a conductive agent and a binder, and uniformly stirring the mixture to form a cathode slurry, applying the cathode slurry on an aluminum foil, and drying the aluminum foil to obtain the positive electrode plate. The conductive agent, the binder and the solvent can be those commonly used in the art.

Another embodiment of the present application provides a lithium-ion battery including the above-mentioned positive electrode plate. It should be noted that the lithium-ion battery can be manufactured by laminating or winding the positive electrode plate, a separator and a negative electrode plate, and then assembling with a housing. The housing is filled with an electrolyte. The negative active material attached to the negative electrod plate may be, for example, one or more of graphite, hard carbon, silicon material, lithium titanate, and metallic lithium. The separator and the electrolyte can be those commonly used in the art.

Another embodiment of the present application provides an electrical device including the above-mentioned lithium-ion battery. It should be noted that the lithium-ion battery can be used as a power source or an energy storage unit in the electrical device. The electrical device includes but is not limited to electric vehicles, smart home appliances, computers, mobile phones, digital cameras, etc.

In an embodiment of the present application, provided is a ternary cathode material, including at least one of the following characteristics:
an increase in moisture content not more than 97 ppm, such as between 13 ppm and 97 ppm, after storage for 30 days at a temperature of 25°C and a relative humidity of 40% as compared to that after storage for 0 day;
an increase in moisture content not more than 118 ppm, such as between 23 ppm and 118 ppm, after storage for 60 days at a temperature of 25°C and a relative humidity of 40% as compared to that after storage for 0 day;
an increase in moisture content not more than 297 ppm, such as between 128 ppm and 297 ppm, after storage for 30 days at a temperature of 25°C and a relative humidity of 80% as compared to that after storage for 0 day; and
an increase in moisture content not more than 315 ppm, such as between 133 ppm and 315 ppm, after storage for 60 days at a temperature of 25°C and a relative humidity of 80% as compared to that after storage for 0 day.

In an embodiment of the present application, the battery prepared from the ternary cathode material has a capacity retention rate at 100th cycle of not less than 92%, wherein the capacity retention rate at 100th cycle is measured by subjecting the battery stored at 45°C and 40% or 80% relative humidity for 60 days, to charge and discharge for 100 cycles with 0.3 C constant current at a voltage of 2.5 V to 4.25 V

Compared with related technologies, the ternary cathode material, the preparation method thereof, the positive electrode plate, the lithium-ion battery, and the electrical device mentioned in the above have at least the following advantages.
(1) The material of the coating layer includes polyhedral oligomeric silsesquioxane (POSS), and the coating layer covers the surface of the ternary cathode material bulk to produce a superhydrophobic effect. The inner inorganic layer of the coating layer is closely bound to the ternary cathode material bulk, and the outer organic layer of the coating layer is in contact with the air, thereby effectively reducing the hygroscopicity of the ternary cathode material, thereby improving the adaptability of the ternary cathode material to the storage environment, and extending the storage time thereof.
(2) The coating layer which is superhydrophobic can constrain the expansion and extension of microcracks, absorb energy, and reduce stress concentration in the ternary cathode material bulk. The organic active sites of the coating layer can increase the cross-linking degree and compatibility of the system, improve the mechanical properties and strength of the ternary cathode material, thereby maintaining the structural stability of the ternary cathode material and improving the cycling retention rate of the lithium-ion batteries.

The present application will be further described in detail below in conjunction with specific examples and comparative examples. The experimental raw materials used in the following examples and comparative examples of the present application can be purchased from the market or prepared according to conventional methods well known to those skilled in the art.

In the following Examples and Comparative Examples, cage-type aminopropylisooctyl POSS from Xi'an Qiyue Biology was used as amino-polyhedral oligomeric silsesquioxane (i.e., POSS-NH₂), and cage-type ethyl methacrylate-POSS from Xi'an Qiyue Biology was used as acrylate-polyhedral oligomeric silsesquioxane (i.e., POSS-acrylate).

### Example 1

In this example, the ternary cathode material bulk precursor was Ni_{0.55}Co_{0.05}Mn_{0.40}(OH)₂, and both the first lithium source and the second lithium source were Li₂CO₃.

The preparation of the ternary cathode material bulk includes the following steps.
S1. Li₂CO₃ and Ni_{0.55}Co_{0.05}Mn_{0.40}(OH)₂ in a molar ratio of 0.95:1 were fully mixed to obtain an intermediate A.
S2. The intermediate A was pre-sinterred at 650°C for 6 hours to obtain an intermediate B.
S3. The intermediate B and Li₂CO₃ in a molar ratio of 1:0.08 were fully mixed, and then sinterred at 890°C for 14 hours, thereby obtaining a ternary cathode material bulk with a specific surface area of 1.25±0.2 m²/g and a chemical formula of LiNi_{0.55}Co_{0.05}Mn_{0.40}O₂.

The ternary cathode material was prepared as follows.

LiNi_{0.55}Co_{0.05}Mn_{0.40}O₂ and POSS-NH₂ in a mass ratio of 1:0.003 were fully mixed, and then sinterred at 300°C for 8 hours, so that NH₂-POSS was covered on the surface of LiNi_{0.55}Co_{0.05}Mn_{0.40}O₂, thus obtaining the ternary cathode material (LiNi_{0.55}Co_{0.05}Mn_{0.40}O₂@POSS-NH₂).

### Example 2

In this example, the ternary cathode material bulk precursor was Ni_{0.62}Co_{0.25}Mn_{0.13}(OH)₂, and the first lithium source was Li₂CO₃, and the second lithium source was LiOH.

The preparation of the ternary cathode material bulk includes the following steps.

S1. Li₂CO₃ and Ni_{0.62}Co_{0.25}Mn_{0.13}(OH)₂ in a molar ratio of 0.75:1 were fully mixed to obtain an intermediate A.

S2. The intermediate A was pre-sinterred at 600°C for 6 hours to obtain an intermediate B.

S3. The intermediate B and LiOH in a molar ratio of 1:0.27 were fully mixed, and then sinterred at 860°C for 11 hours, thereby obtaining a ternary cathode material bulk with a specific surface area of 0.85±0.2 m²/g and a chemical formula of LiNi_{0.62}Co_{0.25}Mn_{0.13}O₂.

The ternary cathode material was prepared as follows.

LiNi_{0.62}Co_{0.25}Mn_{0.13}O₂ and acrylate-POSS in a mass ratio of 1:0.002 were fully mixed, and then sinterred at 300°C for 8 hours, so that acrylate-POSS was covered on the surface of LiNi_{0.62}Co_{0.25}Mn_{0.13}O₂, thus obtaining the ternary cathode material (LiNi_{0.55}Co_{0.05}Mn_{0.40}O₂@POSS-acrylate).

### Example 3

In this example, the ternary cathode material bulk precursor was Ni_{0.78}Co_{0.12}Al_{0.10}(OH)₂, and both the first lithium source and the second lithium source were Li₂CO₃.

The preparation of the ternary cathode material bulk includes the following steps.

S1. Li₂CO₃ and Ni_{0.78}Co_{0.12}Al_{0.10}(OH)₂ in a molar ratio of 0.90: 1 were fully mixed to obtain an intermediate A.

S2. The intermediate A was pre-sinterred at 600°C for 4 hours to obtain an intermediate B.

S3. The intermediate B and Li₂CO₃ in a molar ratio of 1:0.15 were fully mixed, and then sinterred at 800°C for 15 hours to obtain a ternary cathode material bulk with a specific surface area of 2.0±0.2 m²/g and a chemical formula of LiNi_{0.78}Co_{0.12}Al_{0.10}O₂.

The ternary cathode material was prepared as follows.

LiNi_{0.78}Co_{0.12}Al_{0.10}O₂, POSS-NH₂ and POSS-acrylate in a mass ratio of 1:0.001:0.001 were fully mixed, and then sinterred at 270°C for 6 hours, so that POSS-NH₂ and POSS-acrylate were covered on the surface of LiNi_{0.78}Co_{0.12}Al_{0.10}O₂, thus obtaining the ternary cathode material (LiNi_{0.78}Co_{0.12}Al_{0.10}O₂@POSS-NH₂/POSS-acrylate).

### Example 4

In this example, the ternary cathode material bulk precursor was Ni_{0.82}Co_{0.06}Mn_{0.12}(OH)₂, both the first lithium source and the second lithium source were LiOH, and the metal compound was TiO₂.

The preparation of the ternary cathode material bulk includes the following steps.

S1. LiOH, TiOz and Ni_{0.82}Co_{0.06}Mn_{0.12}(OH)₂ in a molar ratio of 0.95:0.005:1 were fully mixed to obtain an intermediate A.

S2. The intermediate A was pre-sinterred at 550°C for 5 hours to obtain an intermediate B.

S3. The intermediate B and LiOH in a molar ratio of 1:0.08 were fully mixed, and then sinterred at 760°C for 12 hours to obtain a ternary cathode material bulk with a specific surface area of 0.45±0.1 m²/g and a chemical formula of LiNi_{0.815}Co_{0.060}Mn_{0.120}Ti_{0.005}O₂.

The ternary cathode material was prepared as follows.

LiNi_{0.815}Co_{0.060}Mn_{0.120}Ti_{0.005}O₂ and POSS-NH₂ in a mass ratio of 1:0.003 were fully mixed and then sinterred at 270°C for 6 hours, so that POSS-NH₂ was covered on the surface of LiNi_{0.815}Co_{0.060}Mn_{0.120}Ti_{0.005}O₂, thus obtaining the ternary cathode material (LiNi_{0.815}Co_{0.060}Mn_{0.120}Ti_{0.005}O₂@POSS-NH₂).

### Example 5

In this example, the ternary cathode material bulk precursor was Ni_{0.90}Co_{0.06}Mn_{0.04}(OH)₂, both the first lithium source and the second lithium source were LiOH, and the metal compounds were Al₂O₃ and ZrO₂.

The preparation of the ternary cathode material bulk includes the following steps.

S1. LiOH, Al₂O₃, ZrOz and Ni_{0.90}Co_{0.06}Mn_{0.04}(OH)₂ in a molar ratio of 1.02:0.003:0.004:1 were fully mixed to obtain an intermediate A.

S2. The intermediate A was pre-sinterred at 550°C for 5 hours to obtain an intermediate B.

S3. The intermediate B and LiOH in a molar ratio of 1:0.03 were fully mixed and then sinterred at 770°C for 10 hours to obtain a ternary cathode material bulk with a specific surface area of 0.60±0.15 m²/g and a chemical formula of LiNi_{0.890}Co_{0.060}Mn_{0.040}Al_{0.006}Zr_{0.004}O₂.

The ternary cathode material was prepared as follows.

LiNi_{0.890}Co_{0.060}Mn_{0.040}Al_{0.006}Zr_{0.004}O₂ and POSS-NH₂ in a mass ratio of 1:0.005 were fully mixed and then sinterred at 290°C for 6 hours, so that POSS-NH₂ was covered on the surface of LiNi_{0.890}Co_{0.060}Mn_{0.040}Al_{0.006}Zr_{0.004}O₂, thus obtaining the ternary cathode material (LiNi_{0.890}Co_{0.060}Mn_{0.040}Al_{0.006}Zr_{0.004}O₂@POSS-NH₂).

### Example 6

Example 6 was substantially the same as Example 1, except that LiNi_{0.55}Co_{0.05}Mn_{0.40}O₂ and POSS-NH₂ were mixed in a mass ratio of 1:0.001 in the preparation of the ternary cathode material.

### Example 7

Example 7 was substantially the same as Example 1, except that LiNi_{0.55}Co_{0.05}Mn_{0.40}O₂ and POSS-NH₂ were mixed in a mass ratio of 1:0.05 in the preparation of the ternary cathode material.

### Comparative Example 1

Comparative Example 1 was substantially the same as Example 1, except that in the preparation of the ternary cathode material, LiNi_{0.55}Co_{0.05}Mn_{0.40}O₂ was sinterred at 300°C for 8 hours, thus obtaining the ternary cathode material (LiNi_{0.55}Co_{0.05}Mn_{0.40}O₂).

### SEM test and XRD test

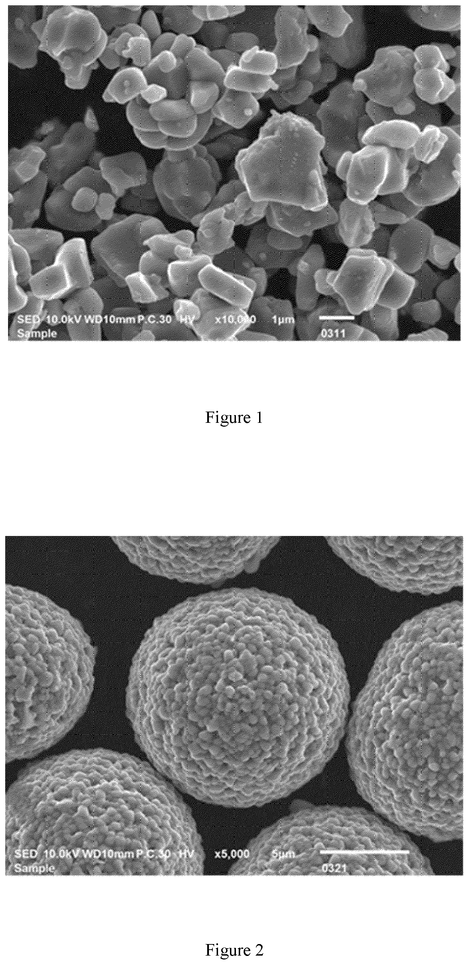

The morphology of the ternary cathode material prepared in Example 1 was characterized by using a scanning electron microscope, and the result is shown in Figure 1. It can be seen from Figure 1 that the surface of the ternary cathode material prepared in Example 1 was smooth and uniform, without aggregates.

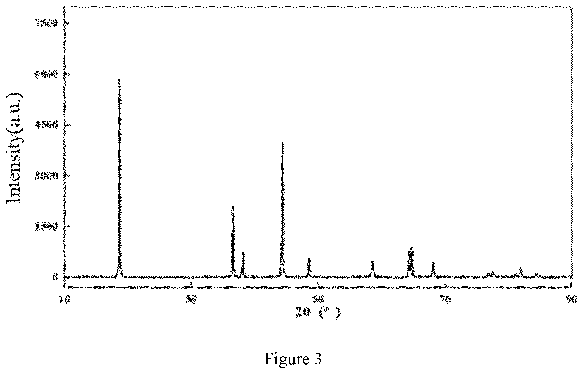

An XRD test was performed on the ternary cathode material prepared in Example 1, and the result is shown in Figure 3. It can be seen that the ternary cathode material has sharp diffraction peaks, indicating a good crystal structure and high crystallinity.

The morphology of the ternary cathode material prepared in Example 4 was characterized by using a scanning electron microscope, and the result is shown in Figure 2. It can be seen that the surface of the ternary cathode material was smooth and uniform, without aggregates. In Example 4, the coating layer material POSS-NH₂, which has crystallinity much lower than that of the ternary cathode material bulk, constitutes a small proportion in the ternary cathode material, and thus cannot be deteteced apparently. As a result, the peak shape of the coating layer material was not visible in Figure 2.

### Moisture content test

Under two types of conditions, i.e., at a temperature of 25°C and a relative humidity of 40%, and at a temperature of 25°C and a relative humidity of 80%, the moisture content of the ternary cathode materials prepared in Examples 1 to 7 and Comparative Example 1 in a dispersive form after storage for 0 day, 1 day, 10 days, 30 days and 60 days respectively was tested. The results are shown in Table 1.

**Table 1**

| Group | | Ex. 1 | Ex. 2 | Ex. 3 | Ex. 4 | Ex. 5 | Ex. 6 | Ex. 7 | Comp. Ex. 1 |
|---|---|---|---|---|---|---|---|---|---|
| Moisture content after 0-day storage (ppm) | | 205 | 268 | 275 | 85 | 102 | 297 | 138 | 248 |
| 40% relative humidity | Moisture content after 1-day storage(ppm) | 215 | 266 | 284 | 101 | 115 | 339 | 142 | 577 |
| | Moisture content after 10-day storage (ppm) | 224 | 285 | 294 | 157 | 136 | 357 | 167 | 924 |
| | Moisture content after 30-day storage (ppm) | 218 | 289 | 305 | 182 | 172 | 369 | 169 | 1172 |
| | Moisture content after 60-day storage (ppm) | 236 | 296 | 298 | 203 | 211 | 372 | 187 | 1453 |
| 80% relative humidity | Moisture content after 1-day storage (ppm) | 225 | 296 | 384 | 167 | 135 | 367 | 153 | 853 |
| | Moisture content after 10-day storage (ppm) | 344 | 395 | 424 | 304 | 276 | 426 | 227 | 1226 |
| | Moisture content after 30-day storage (ppm) | 368 | 429 | 497 | 382 | 332 | 468 | 266 | 1803 |
| | Moisture content after 60-day storage (ppm) | 366 | 446 | 526 | 400 | 341 | 465 | 271 | 2204 |

It can be seen from the data in Table 1 that the ternary cathode materials prepared in Examples 1 to 7 after storage at 25°C and relative humidity of 40% or 80%, exhibited slight increase in moisture content due to the formation of POSS-based hydrophobic coating layer on the surface of the ternary cathode material, while the ternary cathode material in Comparative Example 1 absorbed a large amount of water and exhibited a significant increase in moisture content due to without formation of the coating layer.

### Electrochemical performance test

The ternary cathode materials prepared in Examples 1 to 7 and Comparative Example 1 were used to assemble button batteries. Test conditions include: LR 2032, 0.1C, 2.5V to 4.3V, vs. Li⁺/Li. The positive electrode plates of the button batteries were prepared with the cathode material, conductive agent and polyvinylidene fluoride (PVDF) in a mass ratio of 95:3:2 as a formulation. The assembled button batteries were charged and discharged for 100 cycles with a constant current of 0.3C at a voltage range from 2.5V to 4.25V in a environment with a constant temperature of 45°C. The test results are shown in Table 2.

**Table 2**

| Gro up | Item | 0-day stora ge | 40% relative humidity | | | | 80% relative humidity | | | |
|---|---|---|---|---|---|---|---|---|---|---|
| | | | 1-day stora ge | 10-day stora ge | 30-day storage | 60-day storage | 1-day stora ge | 10-day storage | 30-day storage | 60-day storage |
| Ex. 1 | Specific discharge capacity (mAh/g) | 208.7 | 208.8 | 208.6 | 208.2 | 207.8 | 208.1 | 207.4 | 207.5 | 207.3 |
| | Initial efficiency (%) | 91.2 | 91.2 | 91 | 91.1 | 90.9 | 91 | 90.7 | 90.8 | 90.7 |
| | Capacity retention rate at 100th cycle (%) | 95.1 | 95.2 | 95 | 95 | 94.8 | 95 | 94.5 | 94.7 | 94.7 |
| Ex. 2 | Specific discharge capacity (mAh/g) | 211.4 | 211.5 | 211.3 | 211.0 | 210.8 | 211.0 | 211.1 | 210.7 | 210.6 |
| | Initial efficiency (%) | 91.5 | 91.3 | 91.2 | 91.3 | 91.0 | 91.2 | 91.1 | 91.1 | 90.9 |
| | Capacity retention rate at 100th cycle (%) | 95.7 | 95.4 | 95.2 | 95.2 | 95.0 | 95.3 | 95.3 | 95.1 | 94.8 |
| Ex. 3 | Specific discharge capacity(m Ah/g) | 215.3 | 215.1 | 215.0 | 214.7 | 214.5 | 215.0 | 214.8 | 214.8 | 214.6 |
| | Initial efficiency (%) | 91.3 | 91.2 | 91.1 | 91.1 | 90.9 | 91.1 | 91.0 | 90.8 | 90.7 |
| | Capacity retention rate at 100th cycle (%) | 94.3 | 94.1 | 94.0 | 93.8 | 93.7 | 94.1 | 93.7 | 93.6 | 93.5 |
| Ex. 4 | Specific discharge capacity(m Ah/g) | 217.7 | 217.4 | 217.3 | 217.4 | 217.1 | 217.2 | 217.0 | 216.9 | 216.7 |
| | Initial efficiency (%) | 91.7 | 91.5 | 91.5 | 91.4 | 91.2 | 91.2 | 91.2 | 91.1 | 90.8 |
| | Capacity retention rate at 100th cycle (%) | 94.8 | 94.6 | 94.5 | 94.5 | 94.3 | 94.6 | 94.3 | 94.2 | 94.0 |
| Ex. 5 | Specific discharge capacity(m Ah/g) | 224.7 | 224.3 | 224.1 | 223.9 | 223.8 | 224.2 | 223.8 | 223.4 | 223.2 |
| | Initial efficiency (%) | 91.2 | 91.1 | 91.0 | 90.8 | 90.8 | 91.0 | 90.9 | 90.7 | 90.6 |
| | Capacity retention rate at 100th cycle (%) | 93.1 | 92.9 | 92.5 | 92.2 | 92.2 | 92.7 | 92.3 | 92.1 | 92.0 |
| Ex. 6 | Specific discharge capacity(m Ah/g) | 208.6 | 208.5 | 208.4 | 208.2 | 207.6 | 208.0 | 207.1 | 207.2 | 206.9 |
| | Initial efficiency (%) | 91.0 | 91.1 | 91.1 | 91.0 | 90.7 | 90.8 | 90.5 | 90.7 | 90.5 |
| | Capacity retention rate at 100th cycle (%) | 94.9 | 95.0 | 94.9 | 94.9 | 94.7 | 94.8 | 94.3 | 94.5 | 94.5 |
| Ex. 7 | Specific discharge capacity (mAh/g) | 209.0 | 209.0 | 208.9 | 208.7 | 208.2 | 208.5 | 207.9 | 207.9 | 207.7 |
| | Initial efficiency (%) | 91.3 | 91.3 | 91.2 | 91.2 | 91.1 | 91.0 | 91.0 | 90.9 | 90.9 |
| | Capacity retention rate at 100th cycle (%) | 95.3 | 95.3 | 95.2 | 95.1 | 94.9 | 95.0 | 94.8 | 94.8 | 94.7 |
| Co mp. Ex. 1 | Specific discharge capacity (mAh/g) | 207.5 | 205.6 | 201.8 | high moisture content, slurry agglomer ation and invalidati on | high moisture content, slurry agglomer ation and invalidati on | 200.7 | high moisture content, slurry agglomer ation and invalidati on | high moisture content, slurry agglomer ation and invalidati on | high moisture content, slurry agglomer ation and invalidati on |
| | Initial efficiency (%) | 90.7 | 89.4 | 88.1 | | | 88.2 | | | |
| | Capacity retention rate at 100th cycle (%) | 93 | 91.2 | 87.4 | | | 88.3 | | | |

It can be seen from Table 2 that, compared with Comparative Example 1, the batteries which are assembled from ternary cathode materials with a POSS-based hydrophobic coating layer in Examples 1 to 7, have increased discharge specific capacity, initial efficiency, and capacity retention rate at 100th cycle, due to the structural stability maintained by the special cage-like structure of the coating layer and the effective conduction of lithium ions induced by the porous channels in the coating layer. The super hydrophobic coating layers in Examples 1 to 7 can enable the ternary cathode materials to be stable without failure in a high-humidity environment, and the ternary cathode materials still have stable electrochemical performance after being stored for even 60 days.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present application.

The above-described embodiments are only several implementations of the present application, and the descriptions are relatively specific and detailed, but they should not be construed as limiting the scope of the present application. It should be understood by those of ordinary skill in the art that various modifications and improvements can be made without departing from the concept of the present application, and all fall within the protection scope of the present application. Therefore, the patent protection of the present application shall be defined by the appended claims, and the description and the accompanying drawings can be used to explain contents of the claims.

## Claims

1. A ternary cathode material, comprising a ternary cathode material bulk and a coating layer, wherein
the coating layer is covered on a surface of the ternary cathode material bulk;
the ternary cathode material bulk comprises a material represented by a chemical formula of LiNiₓCo_{y}M_{1-z-y}O₂, wherein M comprises one or more of Mn, Al, Mg, Ti, Zr, Y, Nb, W, Ce, Sb, Sr, or Ta, 0.50<x≤0.98, 0≤y≤0.25, and x+y<1; and a material of the coating layer comprises polyhedral oligomeric silsesquioxane.

2. The ternary cathode material according to claim 1, wherein the ternary cathode material bulk comprises a material represented by a chemical formula of LiNiₓCo_{y}M_{1-x-y}O₂, wherein M comprises one or more of Mn, Al, Ti, or Zr, 0.50<x≤0.98, 0<y≤0.25, and x+y<1.

3. The ternary cathode material according to claim 1 or 2, wherein the ternary cathode material bulk comprises a material represented by a chemical formula of LiNiₓCo_{y}Mn_{1-x-y}O₂, wherein 0.50<x≤0.98, 0<y≤0.25, and x+y<1.

4. The ternary cathode material according to claim 1 or 2, wherein the polyhedral oligomeric silsesquioxane comprises one or more of alkyl-polyhedral oligomeric silsesquioxane, phenyl-polyhedral oligomeric silsesquioxane, alkenyl-polyhedral oligomeric silsesquioxane, amino-polyhedral oligomeric silsesquioxane, hydroxyl-polyhedral oligomeric silsesquioxane, or acrylate-polyhedral oligomeric silsesquioxane,
preferably, the polyhedral oligomeric silsesquioxane comprises amino-polyhedral oligomeric silsesquioxane, acrylate-polyhedral oligomeric silsesquioxane, or a combination thereof,
more preferably, the polyhedral oligomeric silsesquioxane is amino-polyhedral oligomeric silsesquioxane.

5. The ternary cathode material according to claim 1 or 2, wherein a mass ratio of the coating layer to the ternary cathode material bulk is from 0.0001: 1 to 0.05:1, preferably 0.001: 1 to 0.05:1;
optionally, the ternary cathode material bulk has a specific surface area of 0.4 m²/g to 2.5 m²/g, preferably 0.85 m²/g to 2.0 m²/g.

6. A method for preparing a ternary cathode material of any one of claims 1 to 5, comprising:
preparing a ternary cathode material bulk; and
mixing the ternary cathode material bulk with a material of a coating layer, and performing a first sintering, thereby obtaining the ternary cathode material,
wherein the ternary cathode material bulk comprises a material represented by a chemical formula of LiNiₓCo_{y}M_{1-z-y}O₂, where M comprises one or more of Mn, Al, Mg, Ti, Zr, Y, Nb, W, Ce, Sb, Sr, or Ta, 0.50<x≤0.98, 0≤y≤0.25, and x+y<1; and the material of the coating layer comprises polyhedral oligomeric silsesquioxane.

7. The method according to claim 6, wherein process conditions of the first sintering comprise: a temperature of the first sintering in a range from 260°C to 700°C, and a time period of the first sintering in a range from 4 hours to 12 hours.

8. The method according to claim 6 or 7, wherein the preparation of the ternary cathode material bulk comprises steps of:
(1) mixing a ternary cathode material bulk precursor, a first lithium source and optionally a metal compound, and performing a second sintering to obtain an intermediate material; and
(2) mixing the intermediate material with a second lithium source, and performing a third sintering to obtain the ternary cathode material bulk.

9. The method according to claim 8, wherein the preparation of the ternary cathode material bulk comprises at least one of the following characteristics:
(1) the ternary cathode material bulk precursor in step (1) comprises a material represented by a chemical formula of NiₓCo_{y}M_{1-x-y}(OH)₂, wherein 0.50<x≤0.98, 0≤y≤0.25, x+y <1, and M comprises one or more of Mn, Al, Mg, Ti, Zr, Y, Nb, W, Ce, Sb, Sr, or Ta;
(2) a metal element in the metal compound in step (1) comprises one or more of Al, Mg, Ti, Zr, Y, Nb, W, Ce, Sb, Sr, or Ta, preferably one or more of Al, Ti, or Zr;
(3) a molar ratio of Li⁺ in the first lithium source, the metal element in the optional metal compound, and the ternary cathode material bulk precursor in step (1) is (0.50 to 1.06): (0 to 0.02): 1;
(4) the first lithium source in step (1) and the second lithium source in step (2) each independently comprise one or both of lithium hydroxide and lithium carbonate;
(5) process conditions of the second sintering in step (1) comprise a sintering temperature in a range from 400°C to 650°C, and a sintering time period in a range from 3 hours to 10 hours;
(6) a molar ratio of Li⁺ in the second lithium source to the intermediate material in step (2) is 0:1 to 0.55:1; and
(7) process conditions of the third sintering in step (2) comprise a sintering temperature in a range from 600°C to 1100°C, and a sintering time period in a range from 6 hours to 20 hours.

10. A positive electrode plate, comprising the ternary cathode material of any one of claims 1 to 5 or the ternary cathode material prepared by the method of any one of claims 6 to 9.

11. A lithium-ion battery, comprising the positive electrode plate of claim 10.

12. An electrical device, comprising the lithium-ion battery of claim 11.

13. A ternary cathode material, comprising at least one of the following characteristics:
an increase in moisture content not more than 97 ppm, preferably between 13 ppm and 97 ppm, after storage for 30 days at a temperature of 25°C and a relative humidity of 40% as compared to that after storage for 0 day;
an increase in moisture content not more than 118 ppm, preferably between 23 ppm and 118 ppm, after storage for 60 days at a temperature of 25°C and a relative humidity of 40% as compared to that after storage for 0 day;
an increase in moisture content not more than 297 ppm, preferably between 128 ppm and 297 ppm, after storage for 30 days at a temperature of 25°C and a relative humidity of 80% as compared to that after storage for 0 day; and
an increase in moisture content not more than 315 ppm, preferably between 133 ppm and 315 ppm, after storage for 60 days at a temperature of 25°C and a relative humidity of 80% as compared to that after storage for 0 day.

14. A ternary cathode material, wherein a battery prepared from the ternary cathode material has a capacity retention rate at 100th cycle of not less than 92%, wherein the capacity retention rate at 100th cycle is measured by subjecting the battery stored at 45°C and 40% or 80% relative humidity for 60 days, to charge and discharge for 100 cycles with 0.3 C constant current at a voltage of 2.5V to 4.25V.
